# FASCICULE DE BREVET EUROPEEN

(11) **EP 1 235 501 B1**
(45) Date de publication et mention de la délivrance du brevet: **30.06.2004**
(21) Numéro de dépôt: 00988881.9
(22) Date de dépôt: 06.12.2000
(51) Int. Cl.: A47G 19/22, B65D 77/20, B65B 31/02

(54) **PROCEDE DE CONDITIONNEMENT DE VIN OU BOISSON SIMILAIRE, PRODUITS OBTENUS PAR CE PROCEDE ET DISPOSITIF POUR LA MISE EN OEVRE DU PROCEDE**
BEARBEITUNGSVERFAHREN FÜR WEIN ODER DERGLEICHEN , DAMIT HERGESTELLTE PRODUKTE UND VORRICHTUNG ZUR DURCHFÜHRUNG DES VERFAHRENS
METHOD FOR PACKING WINE OR A SIMILAR BEVERAGE, PRODUCTS OBTAINED USING SAID METHOD AND DEVICE FOR CARRYING OUT THE METHOD

(30) Priorité: 09.12.1999 FR 9915593
(43) Date de publication de la demande: 04.09.2002
(73) Titulaire: Carvin, Pascal, 83210 Sollies Pont (FR)
(72) Inventeur: Carvin, Pascal, 83210 Sollies Pont (FR)
(74) Mandataire: Domange, Maxime
(86) Numéro de dépôt international: PCT/FR2000/003416
(87) Numéro de publication internationale: WO 2001/042087

(56) Documents cités:
- WO-A-96/05123
- WO-A-98/10988
- DE-C- 3 814 937
- FR-A- 2 735 003
- GB-A- 2 089 191
- GB-A- 2 130 574
- GB-A- 2 289 252
- US-A- 4 805 768

## Description

La présente invention est relative à un procédé de conditionnement de vin ou boisson similaire, et aux produits obtenus par ce procédé.

Le brevet DE 3814937 C décrit un conteneur en forme de verre à boire servant d'emballage pour le conditionnement, le transport et la distribution d'un liquide à boire tel que du vin.

La présente invention a pour objet de proposer un procédé amélioré de remplissage et de conditionnement de verre de vin.

L'invention a notamment comme objectif d'allonger la durée de conservation du vin emballé dans un récipient en forme de verre à boire ; en effet la surface libre du vin dans un verre, par laquelle surface peuvent s'effectuer des transformations du vin dues au contact avec l'air, en particulier des phénomènes d'oxydation du vin, est d'une aire beaucoup plus importante que dans le cas d'une bouteille, surtout si l'on considère qu'il faut rapporter cette aire au volume de vin contenu dans le verre (respectivement la bouteille).

On conçoit donc bien l'intérêt d'améliorer le brevet suscité, notamment pour conditionner des vins de garde ou dés vins destinés à être consommés plus d'un mois, de préférence plus de quatre mois, voire plus de dix mois après conditionnement.

La présente invention consiste essentiellement dans un premier aspect à conditionner le vin ou la boisson similaire dans un récipient entièrement fermé, dont la perméabilité globale à l'oxygène, c'est-à-dire incluant la perméabilité des parois du récipient, de l'opercule et de la zone de jonction entre ledit récipient et ledit opercule, permet la conservation à long terme, de préférence plus de dix mois, d'un vin, sans dépasser la quantité d'oxygène tolérable. Pour ce faire, les parois du récipient sont en matériau non perméable ou quasiment non perméable à l'oxygène à long terme, à savoir ledit récipient est constitué de verre. Le verre présente en effet une perméabilité à l'oxygène quasiment nulle.

Si son opercule présente une très faible perméabilité globale après fermeture sur ledit récipient, de préférence au moins inférieure ou égale à 10 cm³/m²/24 heures, il est possible de conserver un vin plus de dix mois.

Selon un premier aspect, l'invention consiste donc en un procéde selon la revendication 1.

De préférence on choisit un opercule complexe comportant une couche métallique revêtue d'une couche de matière thermoplastique thermoscellable, et dont la perméabilité globale à l'oxygène après thermoscellage est inférieure ou égale à 10 cm³/m²/24 heures.

De préférence on réduit la teneur en oxygène de l'atmosphère gazeuse emprisonnée dans le verre, à une valeur inférieure à la teneur moyenne en oxygène de l'air (soit environ 20 % en volume).

De préférence encore, on conditionne le vin sous une atmosphère gazeuse dont la teneur en oxygène soit inférieure ou égale à 5 % en volume et/ou sous un vide partiel.

Avantageusement on remplit le verre de vin sous atmosphère inerte, comprenant du dioxyde de carbone.

Des durées très longues (jusqu'à 24 mois) de conservation du vin ainsi conditionné ont été constatées en choisissant un opercule dont la perméabilité globale à l'oxygène après adhésion sur ledit récipient est inférieure à 5 cm³/m²/24 heures et en conditionnant le vin sous une atmosphère inerte comprenant du dioxyde de carbone ou un mélange d'azote et de dioxyde de carbone, même dans le cas où - contrairement au brevet suscité - l'espace résiduel délimité par le verre, la surface libre du vin et l'opercule est d'un volume supérieur à 2 cm³ ; bien entendu il est possible et souhaitable de limiter ce volume à cette valeur.

Le conditionnement dans une atmosphère comprenant du dioxyde de carbone présente l'avantage supplémentaire que ce gaz peut être absorbé et se dissoudre dans le vin, dans une période de quelques heures après son conditionnement, ce qui provoque une dépression dans le verre. Ainsi, si ultérieurement au cours de sa conservation le récipient selon l'invention se trouve dans des conditions d'élévation de la température ambiante, notamment au-delà de 25°C, le gaz inclus dans le verre ne provoque pas de surpression et de gonflement de l'opercule sous l'effet de la chaleur.

Dans la mesure où le vin comprend naturellement une teneur en dioxyde de carbone, de l'ordre en général de 50 à 1500 mg/ml, il est préférable de désaturer le vin en dioxyde de carbone préalablement au remplissage du verre et pour ce faire, de dégazer le vin avant conditionnement, notamment de réduire sa teneur en dioxyde de carbone dissout, à une valeur inférieure à 400 mg/ml, de préférence inférieure à 200 mg/ml.

On peut chasser- le dioxyde de carbone dissout dans le vin par barbotage à l'aide d'azote gazeux, en injectant de l'azote gazeux dans le vin.

Pour obtenir une faible perméabilité de l'opercule, on utilise de préférence un matériau stratifié comportant une couche d'aluminium pur revêtu d'une couche de polyéthylène.

De préférence on choisit un tel matériau dans lequel l'épaisseur de la couche métallique soit située dans une plage allant de 10 à 100 microns, et dans lequel l'épaisseur du film plastique soit également située dans cette plage de valeurs ; ceci facilite l'adhésion de l'opercule au buvant du verre sous l'effet d'un chauffage de l'opercule, lequel chauffage doit être très rapide pour ne pas provoquer l'échauffement du vin ; à cet effet la couche métallique de l'opercule est de préférence chauffée par contact avec un élément chauffant résistif, ou bien par induction ; l'élévation de la température de la couche métallique provoque une élévation de la température du film plastique préalablement mis au contact du buvant, ce qui provoque son adhésion au verre ; de préférence lesdites températures atteignent au maximum une valeur de l'ordre de 350°C, en particulier et de préférence de l'ordre de 80°C à 180°C, en quelques secondes ou dixièmes de seconde seulement.

Afin d'améliorer l'adhésion on exerce un effort d'appui de l'opercule sur le verre qui est de préférence situé dans une plage allant de 10 à 250 décaNewtons, en particulier de 30 à 100 décaNewtons.

A cet effet on utilise en outre de préférence comme matériaux constitutifs du récipient en verre des verres soufflés ou soufflés tournés dont la boule de coupe de largeur supérieure à l'épaisseur de la paroi du verre favorise l'adhésion de l'opercule ; alternativement on peut dans certains cas utiliser des verres moulés.

Selon un autre aspect, l'invention consiste à proposer un colis comportant du vin conditionné dans un verre a boire, selon la revendication 11.

Plus particulièrement ladite atmosphère gazeuse à Plus particulièrement ladite atmosphère gazeuse à l'intérieur du récipient comprend du dioxyde de carbone et se trouve en légère dépression par rapport à l'atmosphère ambiante extérieure. Dans certains cas, on observe que l'opercule souple adopte, juste après conditionnement, une forme légèrement en creux vers l'intérieur du récipient.

Bien que l'invention s'applique essentiellement au conditionnement du vin, elle peut être aussi utilisée pour le conditionnement dans un verre à boire d'autres boissons sensibles à l'oxygène, en particulier les boissons alcoolisées à base d'extraits végétaux ainsi que les jus de fruits.

L'utilisation d'un opercule comportant une couche métallique permet de faciliter la manutention du verre rempli et fermé grâce à la bonne tenue à l'enfoncement de l'opercule.

Selon une variante de réalisation, l'appauvrissement en oxygène de l'atmosphère gazeuse contenue dans le verre peut être obtenu en réalisant un vide partiel avant fermeture du verre par scellage de l'opercule.

Une installation de conditionnement de vin ou boisson similaire dans des verres à boire comporte :
- un convoyeur de transport des verres,
- un poste de remplissage des verres par une boisson,
- un poste de fermeture du verre par thermoscellage d'un opercule,
- un poste de soufflage de gaz inerte comprenant de préférence du dioxyde de carbone et/ou un mélange d'azote et de dioxyde de carbone ou de mise sous vide,
lesdits postes étant disposés le long du convoyeur.

De préférence on réalise le soufflage de gaz inerte avant et après remplissage desdits récipients par ladite boisson.

D'autres avantages et caractéristiques de l'invention seront compris au travers de la description suivante qui se réfère aux dessins annexés, qui illustrent sans aucun caractère limitatif des modes préférentiels de réalisation de l'invention.

La figure 1 illustre schématiquement un poste de fermeture d'un verre rempli de vin.

La figure 2 illustre schématiquement en vue en coupe un opercule utilisé dans l'invention.

La figure 3 illustre schématiquement un dispositif de conditionnement selon l'invention.

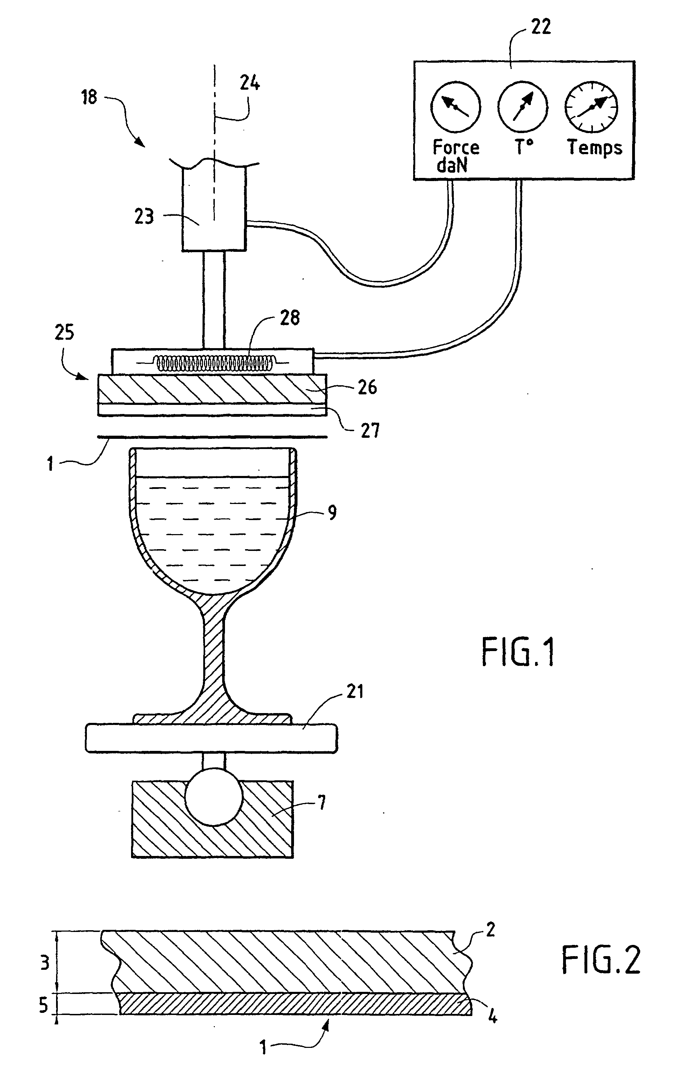

Par référence à la figure 2, le matériau stratifié dans lequel est réalisé l'opercule 1, comporte une couche 2 d'aluminium dont l'épaisseur 3 est comprise entre 30 et 50 microns, et comporte une couche 4 de polyéthylène, qui recouvre la couche 2 et dont l'épaisseur 5 est voisine de 50 microns.

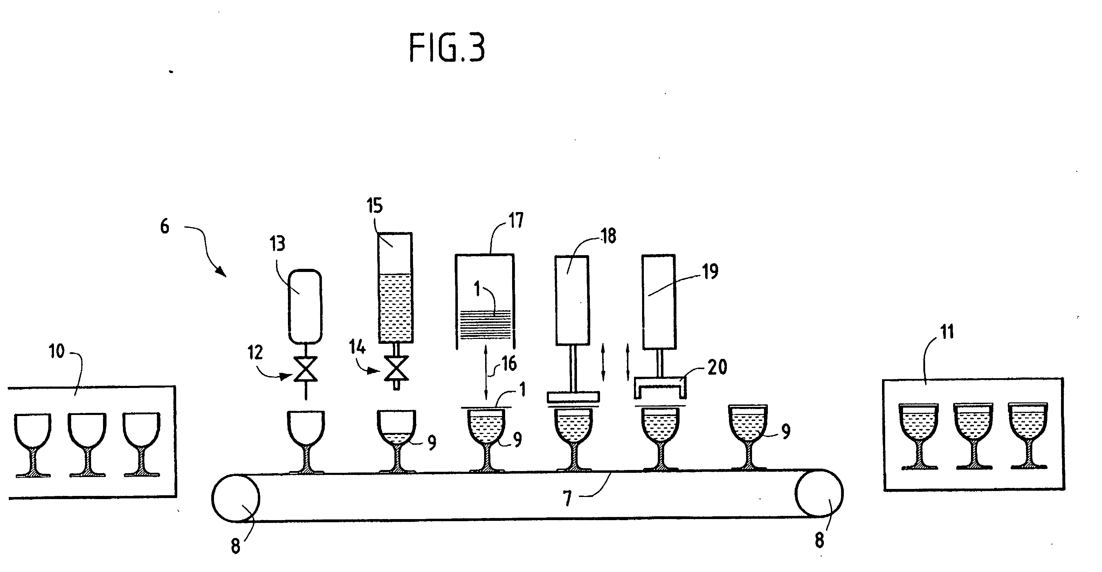

Par référence à la figure 3, le dispositif 6 de conditionnement comporte un convoyeur à bande 7 entraînée par deux rouleaux 8 ; les verres 9 disposés sur le brin supérieur de la bande du convoyeur, sont acheminés par celui-ci du poste 10 de stockage de verres vides au poste 11 de stockage de verres pleins.

Lors de ce transfert, chaque verre passe successivement devant cinq postes ou dispositifs de conditionnement :
- un poste 12 de remplissage du verre par un gaz inerte, de préférence du dioxyde de carbone ou un mélange de dioxyde de carbone et d'azote gazeux provenant d'un réservoir 13 ;
- un poste 14 de remplissage du verre par du vin provenant d'un conteneur 15 ;
- un poste de dépôt d'une capsule 1 sur le verre 9 plein ; ce dépôt est effectué par un manipulateur à ventouse (schématiquement représenté par la flèche 16) qui extrait les capsules une à une du magasin 17 ;
- un poste 18 de thermoscellage de la capsule (ou opercule) 1 sur le buvant du verre 9 ; et
- un poste 19 de post formage des bords de l'opercule pour les rabattre contre les parois du verre ; à cet effet ce poste comporte un vérin déplaçant un outil 20 de forme adaptée à celle du buvant du verre.

Selon une variante préférée de réalisation (non représentée) le poste 12 de soufflage de gaz inerte, de préférence de dioxyde de carbone et/ou d'azote (et/ou un poste de mise en dépression) est disposé à la hauteur du poste 18 de scellage d'opercule, pour provoquer l'appauvrissement en oxygène immédiatement avant (ou pendant) le scellage. En outre, avant le remplissage du verre en vin, celui-ci est de préférence placé sous atmosphère inerte, notamment du dioxyde de carbone et/ou de l'azote pour limiter l'oxydation du vin lors de cette opération de remplissage du verre.

Par référence à la figure 1, le verre 9 repose sur le convoyeur 7 par l'intermédiaire d'un plateau 21 dont la face supérieure est adaptée (par exemple réalisée en un matériau compressible) pour compenser les défauts de planéité du pied du verre.

Le dispositif comporte un boîtier 22 de commande et de réglage des paramètres du thermoscellage de l'opercule 1 ; le dispositif comporte un vérin 23 susceptible de déplacer verticalement (selon l'axe 24) un outil 25 qui comporte une pièce métallique massive 26 ; celle-ci est revêtue sur sa face inférieure d'un tampon déformable 27 réalisé dans un matériau conducteur de la chaleur tel que du silicone ; la pièce 27 est en outre munie sur sa face supérieure d'un élément chauffant résistif 28 ; l'alimentation de cet élément, le temps de contact avec l'opercule et l'effort d'appui par le vérin sont contrôlés par le boîtier 22.

## Revendications

1. Procédé de conditionnement du vin ou boisson similaire dans un récipient en forme de verre à boire (9), qui est constitué de verre, dans lequel on ferme ledit récipient en verre par un opercule (1) jetable, procédé **caractérisé en ce que** la perméabilité globale à l'oxygène de l'opercule après thermoscellage sur ledit récipient est inférieure ou égale à 10cm³/m²/24heures, **en ce que** *on appauvrit en oxygène l'atmosphère gazeuse emprisonnée dans le* récipient, *et* **en ce que** *on provoque une dépression dans le récipient.*

2. Procédé selon la revendication 1, dans lequel on choisit un opercule (1) comportant une couche (2) métallique revêtue d'une couche (4) de matière thermoplastique thermoscellable.

3. Procédé selon la revendication 1 ou 2, dans lequel on remplit le verre de vin sous une atmosphère inerte comprenant du dioxyde de carbone.

4. Procédé selon l'une quelconque des revendications 1 à 3, **caractérisé en ce qu'**on réduit la teneur en dioxyde de carbone dissout dans le vin avant conditionnement à une valeur inférieure à 400 mg/ml.

5. Procédé selon l'une quelconque des revendications 1 à 3, **caractérisé en ce qu'**on réduit la teneur en dioxyde de carbone dissout dans le vin avant conditionnement à une valeur inférieure à 200 mg/ml.

6. Procédé selon l'une quelconque des revendications 1 à 5, dans lequel on choisit un opercule dont la perméabilité globale à l'oxygène après fermeture sur ledit récipient est inférieure à 5 cm³ par m² / 24 heures, et dans lequel on conditionne le vin sous une atmosphère inerte comprenant du dioxyde de carbone.

7. Procédé selon la revendication 1 à 6, dans lequel pour la réalisation de l'opercule, on utilise un matériau stratifié comportant une couche d'aluminium pur revêtu d'une couche de polyéthylène.

8. Procédé selon l'une quelconque des revendications 1 à 7, dans lequel l'épaisseur de la couche métallique est située dans une plage allant de 10 à 100 microns, et dans lequel l'épaisseur du film plastique est également située dans cette plage de valeurs.

9. Procédé selon l'une quelconque des revendications 1 à 8, dans lequel on chauffe l'opercule jusqu'à une température maximale de 80°C à 180°C, en quelques secondes ou dixièmes de secondes.

10. Procédé selon l'une quelconque des revendications 1 à 9, dans lequel on exerce un effort d'appui de l'opercule sur le verre qui est situé dans une plage allant de 10 à 250 décaNewtons, de préférence de 30 à 100 décaNewtons.

11. Colis pouvant être obtenu par un procédé selon l'une des revendications 1 à 10, comportant du vin ou boisson similaire conditionné dans un récipient en forme verre à boire, l'atmosphère gazeuse présente dans le verre étant appauvrie en oxygène, **caractérisé en ce que** ledit récipient est constitué de verre et est obturé par une capsule ou opercule (1) thermo-adhérée dont la perméabilité globale à l'oxygène après thermoscellage est inférieure ou égale à 10 cm³/m²/24heures, et **en ce que** ladite atmosphère gazeuse à l'intérieur du récipient comprend du dioxyde de carbone et se trouve en dépression par rapport à l'atmosphère.

## Patentansprüche

1. Verfahren zum Verpacken von Wein oder einem ähnlichen Getränk in einem trinkglasförmigen, aus Glas bestehenden Behälter (9), beim dem der genannte Glasbehälter durch einen Einwegdeckel (1) verschlossen wird, wobei das Verfahren **dadurch gekennzeichnet ist, dass** die Gesamtsauerstoffdurchlässigkeit des Deckels nach dem Heißsiegeln auf dem Behälter kleiner oder gleich 10 cm³/m²/24 Stunden ist, dass die in dem Behälter eingeschlossene Gasatmosphäre sauerstoffverarmt wird und dass in dem Behälter ein Unterdruck hervorgerufen wird.

2. Verfahren nach Anspruch 1, bei dem ein Deckel (1) gewählt wird, welcher eine Metallschicht (2) aufweist, die mit einer Schicht (4) aus thermoplastischem, heiß siegelbarem Material überzogen ist.

3. Verfahren nach Anspruch 1 oder 2, bei dem das Weinglas unter einer Kohlendioxid enthaltenden Inertatmosphäre gefüllt wird.

4. Verfahren nach irgendeinem der Ansprüche 1 bis 3, **dadurch gekennzeichnet, dass** der Gehalt an in dem Wein gelösten Kohlendioxid vor dem Verpacken auf einen Wert von unter 400 mg/ml reduziert wird.

5. Verfahren nach irgendeinem der Ansprüche 1 bis 3, **dadurch gekennzeichnet, dass** der Gehalt an in dem Wein gelösten Kohlendioxid vor dem Verpacken auf einen Wert von unter 200 mg/ml reduziert wird.

6. Verfahren nach irgendeinem der Ansprüche 1 bis 5, bei dem ein Deckel gewählt wird, dessen Gesamtsauerstoffdurchlässigkeit nach dem Verschließen auf dem genannten Behälter geringer ist als 5 cm³ pro m²/24 Stunden, und bei dem der Wein unter einer Kohlendioxid enthaltenden Inertatmosphäre verpackt wird.

7. Verfahren nach Anspruch 1 bis 6, bei dem zur Herstellung des Deckels ein Schichtmaterial verwendet wird, das eine Schicht aus reinem Aluminium aufweist, die mit einer Polyethylenschicht überzogen ist.

8. Verfahren nach irgendeinem der Ansprüche 1 bis 7, bei dem die Dicke der Metallschicht in einem Bereich zwischen 10 und 100 Mikron liegt, und bei dem die Dicke des Kunststofffilms ebenfalls in diesem Wertebereich liegt.

9. Verfahren nach irgendeinem der Ansprüche 1 bis 8, bei dem der Deckel in einigen Sekunden oder Zehntelsekunden bis zu einer Maximaltemperatur von 80°C bis 180°C erhitzt wird.

10. Verfahren nach irgendeinem der Ansprüche 1 bis 9, bei dem eine Auflagekraft des Deckels auf das Glas ausgeübt wird, die in einem Bereich zwischen 10 und 250 Dekanewton, vorzugsweise zwischen 30 und 100 Dekanewton liegt.

11. Paket, das durch ein Verfahren nach einem der Ansprüche 1 bis 10 erhalten werden kann, mit in einem trinkglasförmigen Behälter verpacktem Wein oder ähnlichem Getränk, wobei die in dem Glas vorliegende Gasatmosphäre sauerstoffverarmt ist, **dadurch gekennzeichnet, dass** der genannte Behälter aus Glas besteht und durch eine(n) mittels Wärme fest aufgebrachte(n) Kapsel oder Deckel (1) verschlossen ist, deren bzw. dessen Gesamtsauerstoffdurchlässigkeit nach dem Heißsiegeln kleiner oder gleich 10 cm³/m²/24 Stunden ist, und dass die Gasatmosphäre innerhalb des Behälters Kohlendioxid enthält und sich gegenüber der Atmosphäre in Unterdruck befindet.

## Claims

1. A method of packaging wine or a similar beverage in a receptacle in the form of a drinking glass (9), in which said receptacle is made of glass and said glass receptacle is closed by a disposable capsule (1) having very low overall permeability to oxygen after being closed onto said receptacle.

2. A method according to claim 1, in which a capsule (1) is selected comprising a metal layer (2) coated in a layer (4) of heat-sealable thermoplastic material, and having overall permeability to oxygen after heat-sealing of not more than 10 cm³/m²/24 h.

3. A method according to claim 1 or 2, in which the oxygen content of the gaseous atmosphere imprisoned within the glass is reduced, with the oxygen content preferably being less than 5%.

4. A method according to claim 2 or 3, in which the glass is filled with wine under an inert atmosphere comprising carbon dioxide.

5. A method according to any one of claims 1 to 4, **characterized in that** the dissolved carbon dioxide content of the wine is reduced prior to packaging to a value of less than 400 mg/ml, and preferably of less than 200 mg/ml.

6. A method according to any one of claims 1 to 5, in which a capsule is selected whose overall permeability to oxygen after being closed onto said receptacle is less than 5 cm³/m²/24 h, and in which the wine is packaged under an inert atmosphere comprising carbon dioxide.

7. A method according to any one of claims 1 to 6, in which the capsule is made using a stratified material comprising a layer of pure aluminum coated in a layer of polyethylene.

8. A method according to any one of claims 1 to 7, in which the thickness of the metal layer lies in the range 10 µm to 100 µm, and in which the thickness of the plastics film likewise lies in said range of values.

9. A method according to any one of claims 1 to 8, in which the capsule is heated to a maximum temperature lying in the range 80°C to 180°C for a few seconds or a few tenths of a second.

10. A method according to any one of claims 1 to 9, in which the capsule is pressed against the glass with a bearing force lying in the range 10 daN to 250 daN, and preferably in the range 30 daN to 100 daN.

11. A pack suitable for being obtained by a method according to one of claims 1 to 10, containing a wine or similar beverage packaged in a receptacle in the form of a drinking glass, said receptacle being made of glass and being closed by a heat-sealed capsule (1) that is substantially oxygen proof, the gaseous atmosphere present inside the glass being depleted in oxygen.
